# EUROPEAN PATENT SPECIFICATION

(11) **EP 0 544 537 B1**
(45) Date of publication and mention of the grant of the patent: **12.06.1996**
(21) Application number: 92310857.5
(22) Date of filing: 27.11.1992
(51) Int. Cl.: H02K 1/17, H02K 15/03

(54) **A stator for miniature motors**
Ständer für Kleinmotoren
Stator pour moteurs miniatures

(30) Priority: 28.11.1991 JP 314315/91
(43) Date of publication of application: 02.06.1993
(73) Proprietor: MABUCHI MOTOR KABUSHIKI KAISHA, Matsudo-shi, Chiba-ken (JP)
(72) Inventor: Ryouichi, Someya, Matsudo-shi, Chiba-ken (JP); Takashima, Hiroaki, Matsudo-shi, Chiba-ken (JP); Satoshi, Suzuki, Matsudo-shi, Chiba-ken (JP); Ichikawa, Katsuyuki, Matsudo-shi, Chiba-ken (JP); Katayama, Katsuhiko, Matsudo-shi, Chiba-ken (JP); Hiromasa, Kunio, Matsudo-shi, Chiba-ken (JP); Ebashi, Kenichi, Matsudo-shi, Chiba-ken (JP)
(74) Representative: Hitchcock, Esmond Antony

(56) References cited:
- EP-A- 0 179 963
- DE-B- 1 203 372
- GB-A- 1 256 932
- GB-A- 1 565 335
- US-A- 3 131 462
- PATENT ABSTRACTS OF JAPAN vol. 9, no. 280 (E-356)(2003) 8 November 1985 & JP-A-60121953

## Description

### A stator for miniature motors

This invention relates to miniature electric motors and particularly to stators for such motors having a permanent magnet fixedly fitted to the inner circumferential surface of a housing. It is especially concerned with motors in which the permanent magnet is made of a flexible ferromagnetic material, and the fitment of such magnets in the housing.

Widely used miniature motors used for equipment such as cameras and VTR movie cameras have a construction in which a stator is formed by fitting a permanent magnet to the inner circumferential surface of a generally cylindrical housing with a closed end. A rotor is mounted within the stator, and an end plate is fitted to the open end of the housing. The permanent magnet most commonly used in these miniature motors is a ferrite sintered magnet. This type of sintered magnet is typically formed into an arc-segment shape, which itself requires much time and labour, and the sintering process also tends to cause distortion or deformation, leading to irregular shape and poor accuracy. When a magnet with these deficiencies is fitted to a housing it often fails to make close contact with the housing, creating gaps between them. This results in an uneven field strength or magnetic flux density working on the armature coil, and irregular rotor speed. The consequence is a substantial deterioration in the performance of the miniature motor.

British Specification No. 1,256,932 describes some arrangements which enable the fitment of resilient magnets to the inner surface of a motor housing. The housing comprises a pair of opposing curved walls and a pair of opposing planar walls. In one particular arrangement, horse-shoe shaped projections are pressed inwardly from each planar wall, and then a pair of magnets are axially inserted into the housing in close contact with the curved walls and in engagement with the projections.

An electric motor discussed in British Specification No. 1,565,335 has a casing of rectangular cross-section. Each of the longer sides of the casing has an aperture formed therein with lugs provided on the edges of the aperture. Magnets are held against the shorter sides of the casing by staking the lugs thereto.

In a stator construction for use in an electric motor disclosed in Japanese Utility Model Publication No. 50002/1978, to which reference is directed, a pair of permanent magnets are formed from a material comprising ferrite powder and a synthetic resin, which has some inherent flexibility. Each magnet is held in place against the inside surface of the motor by ridges formed in the housing wall. While this construction solves some of the problems inherent in the use of a sintered magnet as described above, there remains a risk that as the magnet is fitted, chips of magnet material and other matter remain in the housing body. The present invention addresses this drawback.

A stator of the present invention has a pair of permanent magnets formed in a flexible ferromagnetic material fitted to the inner surface of a motor housing, the housing including a pair of opposing flat sections and a pair of opposing cylindrical sections, each magnet having an arc-segment shape in cross-section and axially extending edges, and being held against the cylindrical sections by projections formed by embossing the flat sections from the outside. However, according to the invention in order to hold the magnets in place the projections are plastically deformed and cut into engaging surfaces on the axially extending edges of the magnets. The invention also provides a method of installing stator magnets in such a configuration within a miniature motor housing.

According to the invention a stator for miniature motors can have good reliability and positive securement for the permanent magnet in the housing without fear of chips and foreign matter scattering inside the motor. This leads to substantial benefits, including better assurance regarding the condition of the housing interior, which can be of great significance in a mass-production manufacturing process.

A known prior stator for a miniature motor, and an embodiment of the invention will now be described by way of example, and with reference to the accompanying schematic drawings wherein:
Figures 1 and 2 are a cross-sectional view and a longitudinal sectional view illustrating a known stator construction;
Figure 3 is a cross-sectional view similar to Figure 1 showing an embodiment of this invention; and
Figure 4 is a longitudinal sectional view similar to Figure 2 showing the embodiment of Figure 3, and illustrating a technique for fitting the permanent magnet therein.

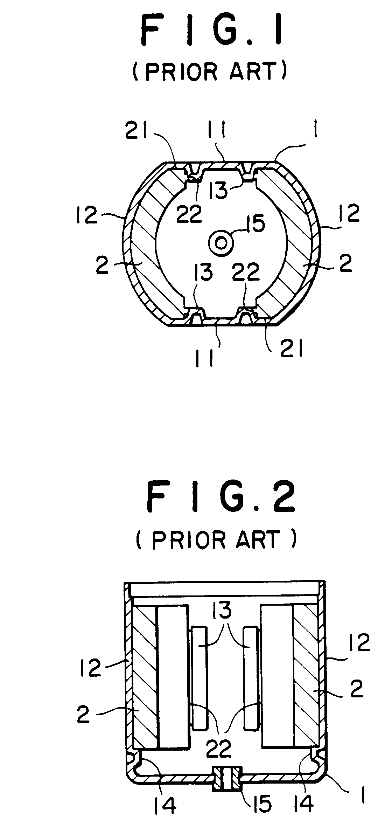

In the stator shown in Figure 1 a housing 1 made of a metallic material, such as mild steel, is formed into a hollow cylinder closed at one end. The housing 1 consists of two opposing flat sections 11, and two opposing cylindrical sections 12. Engaging ridges 13 are formed on the flat sections 11 by embossing from the outside at the locations shown. Projections 14 for axial positioning are formed on the cylindrical sections 12, also by embossing the housing 1 from the outside. A bearing 15 is mounted in the closed end of the housing 1.

A pair of permanent magnets 2 made of a material consisting chiefly of ferrite powder and a synthetic resin, are each formed into an arc-segment shape in cross section and in such a manner that the circumferential length of its outer circumferential surface matches that of the cylindrical sections 12. Each magnet 2 is also formed with flat surfaces 21 which contact the flat sections 11, and ridges 22 which contact the engaging ridges 13. The axial length of the engaging ridges 13 and the ridges 22 is made slightly smaller than the axial length of the permanent magnet 2.

When a permanent magnet 2 is press-fitted from the open end of the housing 1 in the axial direction, the magnet 2 is advanced into the housing 1 while the ridges 22 are slightly compressed as a consequence of the flexibility of the permanent magnet material. Thus, the magnet 2 is fixedly fitted to the housing 1 held in close contact with the inside surfaces of the flat sections 11 and the cylindrical sections 12.

A stator having the aforementioned construction has high dimensional accuracy, is free from breaking and cracking due to press-fitting, and eliminates the need for adhesive and engaging members for assembly. The press-fitting allowance of the permanent magnet 2 can be adjusted, allowing for the amount of the collapse of the ridges 22. However, parts of the ridges 22 may be scraped off by the engaging ridges 13 as the permanent magnet 2 is press-fitted into the housing 1. Further, if the amount of collapse of the ridges happen to increase due to dimensional errors, part of the collapsed ridges 22 may bend over the engaging ridges 13, scraping off part of the engaging ridges 13 in extreme cases.

After the permanent magnet 2 has been press-fitted into the housing 1, the inside of the housing 1 is usually cleaned by compressed-air blasting, etc. to remove any scraped chips of the kind described above. However, chips and other foreign matter that have been left unremoved even after the cleaning are likely to scatter inside the miniature motor after assembly, leading to reduced performance of the miniature motor. In addition, the ridges 22 bending over the engaging ridges 13, as noted above, may interfere with the outer periphery of the rotor. This can also adversely affect motor performance since the gap between the inner circumferential surface of the permanent magnet 2 and the outer circumferential surface of the rotor (not shown) is usually made extremely small to ensure the effective operation of magnetic fluxes of the permanent magnet 2.

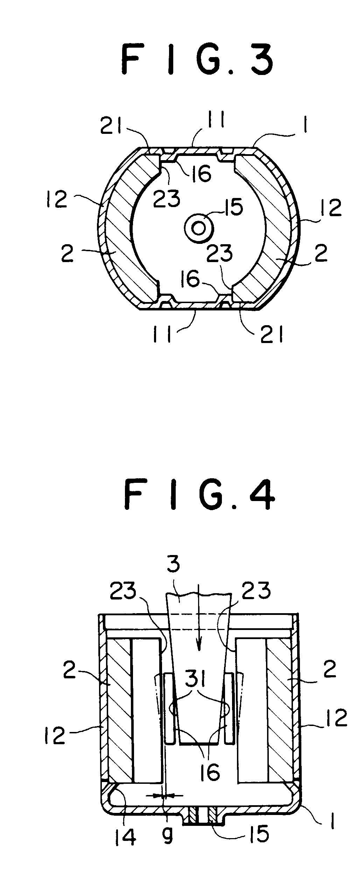

In the embodiment of the invention shown in Figures 3 and 4, engaging projections 16 are provided on the flat parts 11 of the housing 1 by embossing the flat parts 11 from the outside. Engaging surfaces 23 are provided on the edges along the axial line of the permanent magnet 2 in such a manner as to face the engaging projections 16. The engaging surfaces 23 are formed so as to be essentially perpendicular to the flat surfaces 21.

In fitting the permanent magnet 2 in the housing 1 it is first inserted along the inner circumferential surface of the cylindrical parts 12 of the housing 1 to bring one end face of the permanent magnet 2 in contact with the positioning projections 14. In this case, the gap g between the engaging surfaces 23 of the permanent magnet 2 and the engaging projections 16 should ideally be zero. In practice, however, the gap g will be finite, typically about 0.1 mm, for example, to allow the permanent magnet 2 to be easily and smoothly inserted.

Figure 4 also shows a fixing jig 3 in the form of a plate having on both edges thereof tapered surfaces 31 that can make slidable contact with the engaging projections 16 as indicated. As the fixing jig 3 is advanced in the direction shown by the arrow, the tapered surfaces 31 cause the engaging projections 16 to be plastically deformed outward. Thus, the engaging projections 16 cut into the engaging surfaces 23 of the permanent magnet 2, as shown in dotted outline. As a result, the outer circumferential surface and the flat surfaces 21 of the permanent magnet 2 are brought in close contact with the inner circumferential surfaces of the cylindrical sections 12 and the flat sections 11 of the housing 1, respectively.

In this invention, the permanent magnet 2 must have adequate flexibility, and should preferably be a socalled plastic magnet or bonded magnet comprising a mixture consisting chiefly of ferromagnetic material powder and a binder. Any suitable binder material such as nylon resin, polypropylene, polyethylene, or polyphenylene oxide can be used, but nylon resin is most desirable in terms for example of mechanical strength, magnetic properties, adaptability to mass production and cost. Although injection moulding, compressing moulding, extrusion and other methods are available as the moulding technique, injection moulding is most desirable in terms of dimensional accuracy and adaptability to mass production at least.

Although the engaging projections 16 are formed by providing continuous ridges in the axial direction of the housing 1 in this embodiment, they may be formed by a plurality of discontinuous projections. The shape of the engaging projections 16 may be other than that shown in this embodiment so long as they may be plastically deformed toward the engaging surfaces 23 of the permanent magnet 2. Moreover, the fixing jig 3 may be of type other than that shown in Figure 4 so long as it can impart plastic deformation to the engaging projection 16.

The present invention offers the following benefits:
(1) The permanent magnet can be extremely easily inserted into the housing, and positioned precisely without generating unwanted foreign matter due to the frictional resistance caused during such insertion.
(2) The strength with which the permanent magnet is fixed to the housing can be assured as the engaging projections cut into the inside surface of the magnet by plastic deformation, and an adequate fixing strength can be obtained by adjusting the amount to cut made by the engaging projections. This leads to a substantial improvement in reliability.

## Claims

1. A stator for a miniature motor having a pair of permanent magnets (2) formed in a flexible ferromagnetic material fitted to the inner surface of a motor housing (1), the housing including a pair of opposing flat sections (11) and a pair of opposing cylindrical sections (12), each magnet (2) having an arc-segment shape in cross-section and axially extending edges, and being held against the cylindrical sections (12) by projections (16) formed by embossing the flat sections (11) from the outside,
CHARACTERISED IN THAT
to hold the magnets in place the projections (16) are plastically deformed and cut into engaging surfaces (23) on the axially extending edges of the magnets (2).

2. A stator according to Claim 1 wherein the engaging projections (16) are elongate and extend parallel to the axis of the housing.

3. A stator according to Claim 1 wherein the engaging projections (16) comprise projections spaced axially along the flat sections (11) of the housing.

4. A stator according to any preceding Claim wherein the permanent magnets (2) each comprise a mixture of ferromagnetic material and a binder resin.

5. A miniature electric motor comprising a stator according to any preceding Claim.

6. A method of installing stator magnets (2) in a miniature motor housing (1), the housing including a pair of opposing flat sections (11) and a pair of opposing cylindrical sections (12), each magnet (2) having an arc-segment shape in cross-section and axially extending edges, the method comprising providing engaging projections (16) on the housing (1) by embossing the flat sections (11) from the outside;
sliding the magnets in between the engaging projections;
and plastically deforming the engaging projections to cut into engaging surfaces (23) on the axially extending edges of the magnets (2).

7. A method according to Claim 6 wherein the engaging projections (16) are plastically deformed by axially inserting a fixing jig (3) between the engaging projections.

## Patentansprüche

1. Ein Ständer für einen Kleinmotor, der ein Paar von Permanentmagneten (2) aufweist, die aus flexiblem ferromagnetischem Material geformt und auf der Innenseite eines Motorgehäuses (1) angepaßt sind, wobei das Gehäuse ein Paar gegenüberliegender flacher Abschnitte (11) und ein Paar gegenüberliegender zylindrischer Abschnitte (12) aufweist, jeder Magnet (2) eine im Querschnitt bogenförmige Form und axial sich erstreckende Kanten hat, und gegen die zylindrischen Abschnitte (12) gehalten wird durch Fortsätze (16), die ausgebildet werden, indem die flachen Abschnitte (11) von außen eingeprägt werden,
**dadurch gekennzeichnet,**
daß, um die Magneten am Ort zu halten, die Fortsätze (16) plastisch verformt sind, und in Eingriffsflächen (23) an den axial sich erstreckenden Kanten der Magnete (2) einschneiden.

2. Ein Ständer nach Anspruch 1, wobei die Eingriffsfortsätze (16) langgestreckt sind und sich parallel zur Gehäuseachse erstrecken.

3. Ein Ständer nach Anspruch 1, wobei die Eingriffsfortsätze (16) Vorsprünge aufweisen, die axial entlang der flachen Abschnitte (11) des Gehäuses angeordnet sind.

4. Ein Ständer nach einem der vorhergehenden Ansprüche, wobei die Permanentmagneten (2) jeweils eine Mischung aus ferromagnetischem Material und einem Bindeharz aufweisen.

5. Ein Kleinmotor, der einen Ständer nach einem der vorhergehenden Ansprüche aufweist.

6. Ein Verfahren zum Einbau von Ständermagneten (2) in ein Kleinmotorgehäuse (1), wobei das Gehäuse ein Paar gegenüberliegender flacher Abschnitte (11) und ein Paar gegenüberliegender zylindrischer Abschnitte (12) aufweist, jeder Magnet (2) eine im Querschnitt bogenförmige Form und axial sich erstreckende Kanten hat, wobei das Verfahren darin besteht, daß Eingriffsfortsätze (16) an dem Gehäuse (1) bereitgestellt werden, indem die flachen Abschnitte (11) von außen eingeprägt werden; daß die Magnete zwischen die Eingriffsfortsätze eingeschoben werden; und daß die Eingriffsfortsätze plastisch verformt werden, so daß sie in die Eingriffsflächen (23) an den sich axial erstreckenden Kanten der Magnete (2) einschneiden.

7. Ein Verfahren nach Anspruch 6, wobei die Eingriffsfortsätze (16) dadurch plastisch verformt werden, daß eine Spannvorrichtung (3) in Achsrichtung zwischen die Eingriffsfortsätze eingesetzt wird.

## Revendications

1. Stator pour moteur miniature comportant une paire d'aimants permanents (2) réalisés dans un matériau ferromagnétique souple, montés sur la surface interne d'un logement de moteur (1), le logement incorporant une paire de sections plates en regard l'une de l'autre (11) et une paire de sections cylindriques en regard l'une de l'autre (12), chaque aimant (2) présentant une section transversale en forme de segment d'arc avec des bords s'étendant axialement, et étant maintenu contre les sections cylindriques (12) par des saillies (16) formées par emboutissage des sections plates (11) de l'extérieur,
**CARACTERISE EN CE QUE**
pour maintenir les aimants en place, les saillies (16) sont déformées plastiquement et découpées en surface d'engagement (23) sur les bords des aimants (2), bords s'étendant axialement.

2. Stator selon la revendication 1, dans lequel les saillies d'engagement (16) sont allongées et s'étendent parallèlement à l'axe du logement.

3. Stator selon la revendication 1, dans lequel les saillies d'engagement (16) sont constituées par des saillies espacées axialement le long des sections plates (11) du logement.

4. Stator selon l'une quelconque des revendications précédentes, dans lequel les aimants permanents (2) comprennent chacun un mélange de matériau ferromagnétique et une résine de liant.

5. Moteur électrique miniature comprenant un stator selon l'une quelconque des revendications précédentes.

6. Procédé pour la mise en place d'aimants de stator (2) dans un logement de moteur miniature (1), le logement incorporant une paire de sections plates en regard l'une de l'autre (11) et une paire de sections cylindriques en regard l'une de l'autre (12), chaque aimant (2) présentant une section transversale en forme de segment d'arc avec des bords s'étendant axialement, le procédé comprenant les opérations consistant à ménager des saillies d'engagement (16) sur le logement (1) par emboutissage des sections plates (11) depuis l'extérieur ; faire coulisser les aimants dans la partie située entre les saillies d'engagement ; et déformer plastiquement les saillies d'engagement pour qu'elles pénètrent dans les surfaces d'engagement (23) sur les bords des aimants (2), bords s'étendant axialement.

7. Procédé selon la revendication 6, dans lequel les saillies d'engagement (16) sont déformées plastiquement en introduisant axialement un gabarit de fixation (3) entre les saillies d'engagement.
